Europäisches Patentamt

European Patent Office

Office européen des brevets

(19)

(11) **EP 1 128 564 A1**

(12) **EUROPEAN PATENT APPLICATION**

(43) Date of publication:
**29.08.2001 Bulletin 2001/35**

(51) Int Cl.[7]: **H04B 1/707**

(21) Application number: **00301544.3**

(22) Date of filing: **28.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Karimi, Hamid Reza**
  **Swindon, Wiltshire SN5 5BJ (GB)**

• **Mullany, Francis Joseph**
  **Swindon, Wiltshire SN1 2EU (GB)**
• **Sandell, Magnus**
  **Swindon, Wiltshire SN1 3PN (GB)**

(74) Representative: **Williams, David John et al**
**Lucent Technologies UK Limited,**
**5 Mornington Road**
**Woodford Green, Essex IG8 0TU (GB)**

(54) **Multi-user detection CDMA receivers in mobile telecommunications systems**

(57) In order to reduce complexity of computation of Multiple Access Interference (MAI) in a multi-user detection receiver of a mobile telecommunications system, at least some of the cross-correlations ($\rho$) between user spreading codes (c) of the correlation matrix are computed (20) during the call set up process prior to call initiation, and such cross-code correlations are stored in a look up table (22) for use in calculation of the correlation matrix during reception of the user signals. The multi-user detection receiver includes means (10) for forming a channel estimate (h) for each of a plurality of users (1...K), means (12, 14) for forming a system matrix (A), and applying the system matrix to a rake filter (14) to modify incoming signals ($\underline{r}$), means (18) for forming a correlation matrix (R), and multi-user detection (MUD) means (16) employing the correlation matrix to recover user symbols. The invention is applicable both to joint and to symbol-level subtractive interference cancellation detectors, and more generally to any receiver employing multi-user parameter estimation.

**FIG. 3**

EP 1 128 564 A1

## Description

The present invention relates to Code Division Multiple Access (CDMA) receivers in mobile telecommunications systems, particularly though not exclusively multi-user detection receivers.

The issues involved in satisfactory reception at a Base Transceiver Station (BTS) of multiple transmissions from mobile stations (MS), modulated with spread spectrum "spreading codes" are well documented, see the following references:

[1] S. Verdu, "Multiuser Detection", Cambridge University Press, 1998, ISBN 0 521 59373 5.
[2] S. Moshavi, "Multi-User Detection for DS-CDMA Communications", IEEE Communications Magazine, pp. 124-136, October 1996.
[3]A. Duel-Hallen, J. Holtzman, Z.Zvonar, "Multiuser Detection for CDMA Systems", IEEE Personal Communications Magazine, pp. 46-58, April 1995.

As appears from these references, the spreading codes are in principle orthogonal, and should not interfere with one another to enable detection by "matched filter" correlation . In practice however for a variety of reasons, e.g. time delay between the various received signals, there exists cross correlation between the received signals - multiple access interference (MAI). This greatly complicates satisfactory reception, the mathematical complexities making an optimal detector impractical. Various approximation techniques have therefore been devised such as decorrelating detectors which applies the inverse of the correlation matrix to the output of the matched filters. Other detectors are the class of linear detectors including the minimum mean-squared error (MMSE) detector, which minimises the mean squared error between the actual data and the soft output of the detector, and the polynomial expansion (PE) detector which applies a polynomial expansion in the correlation matrix to the matched filter bank output. There is also a class of detectors employing subtractive interference cancellation which creates at the receiver separate estimates of the MAI contributed by each user in order to subtract out some or all of the MAI seen by each user. In order to simplify computation, it has been proposed in [1], that knowledge of or processing of cross correlations may be avoided in certain circumstances, and Reference [2] points out with short spreading the partial correlations for each bit can be assumed the same.

Despite the large number of detectors which have been proposed and implemented, there remains a need for improved detectors for multi-user detection CDMA receivers in mobile telecommunications systems.

## SUMMARY OF THE INVENTION

The concept of the present invention is to provide a receiver which enables a significant part of the computation of the correlation matrix to be carried out prior to the establishment of a communications link. This therefore enables a reduced complexity of computation during the reception process, (or alternatively enables use of a more complex algorithm without increasing overall complexity of real-time computation). Thus computational complexity associated with the computation of the correlation matrix in multi-user parameter estimation in a CDMA system, specifically multi-user detection (MUD) CDMA receiver, is reduced.

A time-sampled signal segment received at a base-transceiver station (BTS)can be written as a vector $\underline{r}$ = A$\underline{x}$+$\underline{n}$ where $\underline{r}$ is the vector of unknown symbols transmitted by all K mobile users in the cell, $\underline{n}$ is the noise vector. Matrix A is a sparse multi-user "system matrix" whose columns represent the channel-filtered user spreading codes. The objective of multiuser detection is to estimate the vector $\underline{x}$ of all user symbols, given the received vector $\underline{r}$ and the matrix A. The implementation of a MUD scheme according to the invention (including joint-detection and symbol-level interference cancellation algorithms) involves the computation of a correlation matrix R=A$^H$A whose elements represent the cross-correlations between various scaled and delayed replicas of the users' spreading codes. The computation of R, which significantly contributes to the overall computational complexity, is reduced by noting in accordance with the invention that the user spreading codes are known a priori at the base station. As a result, the code cross-correlations are computed off-line and stored prior to the establishment of the communication link. The stored values are retrieved in real time to implement the multi-user detection process.

Thus in a first aspect, the invention provides a Code Division Multiple Access (CDMA) receiver for a mobile telecommunications system, including means for forming a channel estimate for each of a plurality of users, means for forming a system matrix wherein rows and columns represent users and spreading codes as modified by channel estimates , means for forming a correlation matrix, and means employing said correlation matrix and system matrix to recover user symbols, characterised in that said means for forming a correlation matrix includes means for computing prior to signal reception at least some cross-correlations between user spreading codes , and storage means for storing such cross-code correlations for use in calculation of the correlation matrix.

The invention is applicable in principle to any type of CDMA receiver having a multi-user detector employing a correlation matrix, specifically joint detectors and symbol-level subtractive interference cancellation detectors.

More generally, the invention relates to reduction of computational complexity of multi-user parameter estimation in CDMA systems, and accordingly the invention provides in a more general aspect, a Code Division Multiple Access receiver for a mobile telecommunications system, including means for multi-user parameter estimation for a plurality of users, including means for forming a correlation matrix, characterised in that said means for forming a correlation matrix includes means for computing prior to signal reception at least some cross- correlations between user spreading codes, and storage means for storing such cross-code correlations for use in calculation of the correlation matrix.

In a further aspect, the invention provides in a multi-user detection Code Division Multiple Access (CDMA) mobile telecommunications system, a method of receiving individual user signals, comprising:

forming a multi-user parameter estimation for a plurality of users (1...K), including forming a correlation matrix (R), and employing said correlation matrix to recover user symbols, characterised in that the method comprises detecting a new call, recovering the spreading code for the respective kth mobile station at the base transceiver station (BTS) during the call set-up process;

computing during the call set-up process cross-correlations between the codes of mobile station k and those of the k-1 mobile stations which have already established calls with the BTS; and

employing the cross-correlations during the call for reception of the symbols transmitted by all k mobile stations.

## BRIEF DESCRIPTION OF THE DRAWINGS

A preferred embodiment of the present invention will now be described with reference to the accompanying drawings, wherein:-

Figure 1 is a diagram of a system matrix employed in the present invention;

Figure 2 is a block schematic diagram of a known multi-user detection receiver for multi-user CDMA signals;

Figure 3 is a block schematic diagram of the preferred embodiment of the multi-user detection receiver according to the invention;

Figure 4 is a diagram of a correlation matrix employed in the present invention;

Figures 5 and 6 are explanatory diagrams showing the computation of sub-matrices of the correlation matrix; and

Figure 7 is a flow chart showing a method of call establishment in accordance with the invention.

## DESCRIPTION OF THE PREFERRED EMBODIMENT

A time-sampled segment of the signal received at a CDMA base-station can be written as a complex vector $\underline{r} = A\underline{x} + \underline{n}$ where $\underline{x}$ is the vector of unknown complex symbols transmitted by all K mobile users in the cell and $\underline{n}$ is the complex noise vector. The complex matrix A is a multi-user "system matrix" whose columns represent the user spreading codes which are modified by the filtering action of the radio channel.

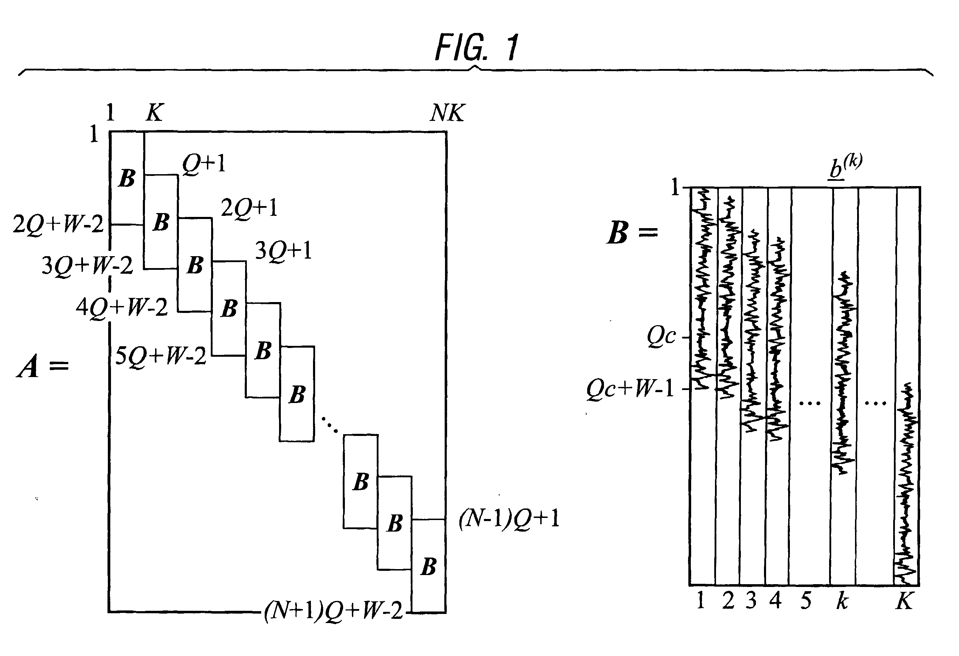

Without loss of generality (users may have different spreading factors, i.e. different data rates), consider a scenario as shown in the matrix representation of Figure 1 involving K cochannel asynchronous mobile transmissions each using a spreading factor of Q. The first K columns represent K transmissions of the first symbol, and the nth K columns represent the nth symbol for each of K users. In each column, there is contained the user spreading code as modified by the respective user channel. Thus the system matrix may be represented by an array of sub-matrices B, one sub-matrix for each user symbol, generally arranged along the diagonal of A. Figure 1 shows the system matrix for a chip-sampled time slot duration corresponding to N bits per user. Each sub matrix B may be written as

$$\underline{b}^{(k)} = \sum_{l=1}^{L} h_l^{(k)} \underline{c}^{(k)}(\tau_l^{(k)})$$

where the non-zero elements of the $k^{th}$ column, $\underline{b}^{(k)}$, of sub-matrix B represent the convolution between the $k^{th}$ user's complex spreading code $\underline{c}^{(k)}$ (of length Q) and the $k^{th}$ user's propagation channel $\underline{h}^{(k)}$ or channel estimate (of length W). As is well known in the art, the array of sub-matrices B, one sub-matrix for each user symbol, generally arranged along the diagonal of A. Figure 1 shows the system matrix for a chip-sampled time slot duration corresponding to N bits per user. Each sub matrix B may be written as where the non-zero elements of the $k^{th}$ column, $\underline{b}^{(k)}$, of sub-matrix B represent the convolution between the $k^{th}$ user's complex spreading code $\underline{c}^{(k)}$ (of length Q) and the $k^{th}$ user's prop-

agation channel $\underline{h}^{(k)}$ or channel estimate (of length W). As is well known in the art, the channel $\underline{h}^{(k)}$ is typically represented by a filter having L taps (or fingers) of complex amplitudes $h_l^{(k)}$ 1=1...L and delays $\tau_1^{(k)} < \tau_2^{(k)} < ... < \tau_L^{(k)}$. The channel is assumed fixed over a time slot period, and the notation $\underline{c}^{(k)} (\tau_1^{(k)})$ represents the code $\underline{c}^{(k)}$ delayed by $\tau_1^{(k)}$ Many multi-user detection schemes involve the computation of the correlation matrix $R=A^H A$. $A^H$ is the complex transposed skew symmetric representation of the matrix A, and the correlation matrix R is Hermitian. It will be appreciated that other representations of the correlation matrix are possible, and that the present invention does not depend on the precise formulation of the correlation matrix.

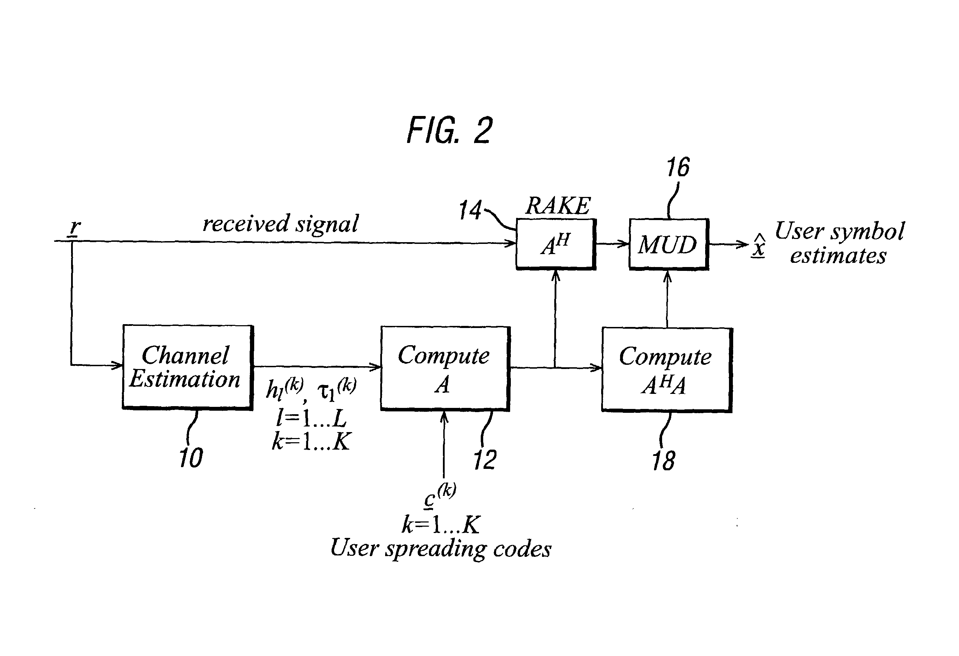

The block diagram for a known multi-user-detection receiver, embodying the above considerations, is depicted in Figure 2. In figure 2, an incoming signal $\underline{r}$ is applied to a channel estimation unit 10. Typically this forms for each user from an initial training sequence the coefficients $h_1^{(k)}$, $\tau_1^{(k)}$. These coefficients are applied to a system matrix computation unit 12, which, together with the user spreading codes $\underline{c}^{(k)}$ computes the matrix A. The complex transposed skew symmetric form of the matrix, AH is applied to a rake filter 14 , having L taps or fingers. The incoming signal is modified in rake filter 14 according to $A^H$. The modified signal $\underline{y}$ is applied to multi-user detection unit 16. The correlation matrix $A^H A$ is computed in unit 18 and applied to MUD unit 16, for recovering the user symbols. Thus the signal $\underline{y}$ applied to MUD unit 16 from rake filter 14 includes cross correlation interference (MAI). It is the task of unit 16 to remove such cross correlations, and derive estimates of the symbols x transmitted by the users.

In a **joint detection receiver**, MUD unit 16 derives joint estimates of symbols x by simultaneously solving the equations for the signal $\underline{y}$, in known manner. It will be noted the present invention is also applicable to the known class of symbol-level **subtractive interference cancellation detectors**. These create at the receiver separate estimates of the MAI contributed by each user in order to subtract out some or all of the MAI seen by each user. Both in the case of the joint detector and the subtractive interference cancellation detector, computation of the correlation matrix R is necessary.

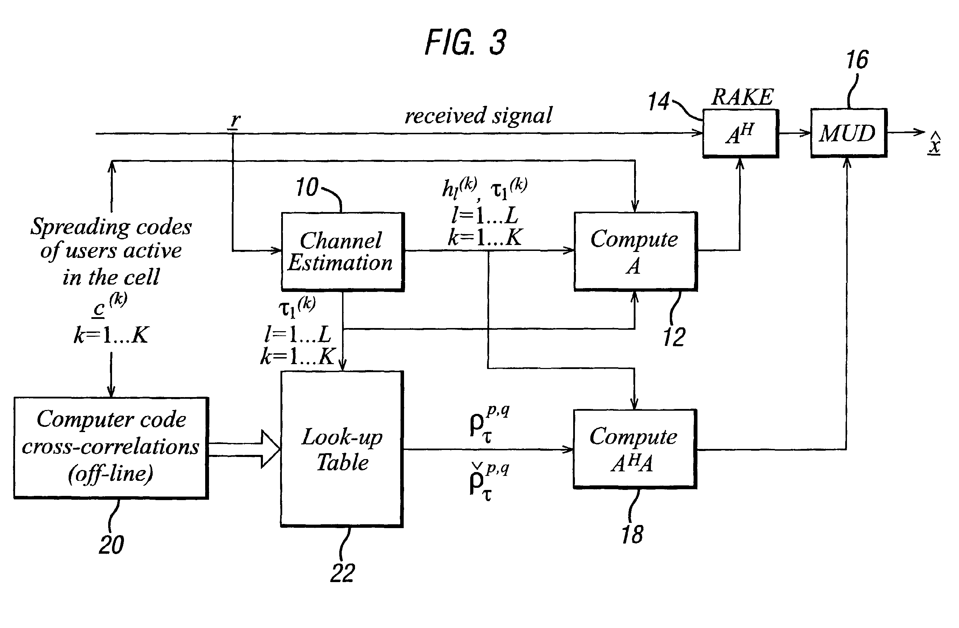

Referring now to Figure 3, the preferred multi-user detection receiver of the present invention is shown in block schematic form. Similar parts to those of Figure 2 are represented by the same reference numerals. In figure 3, unit 20 is provided for computing spreading code cross correlations p prior to initiation of a user call, as will be described more specifically below. Only spreading codes of active users are applied to unit 20, and to system matrix unit 12. These spreading code cross correlations p are stored in a look up table 22. The look up table 22 is accessed by the channel delay values $\tau_1^{(k)}$, computed by channel estimate unit 10, to provide the appropriate values of cross correlations p to the correlation matrix unit 18. Thus unit 18 is relieved of the burden of computing the cross correlation values p during a user call. It will be observed that cross correlation unit 18 requires in addition the values $h_1^{(k)}$ computed by estimate unit 10. It does not require the system matrix computed in unit 12, in contrast to the arrangement of Figure 2.

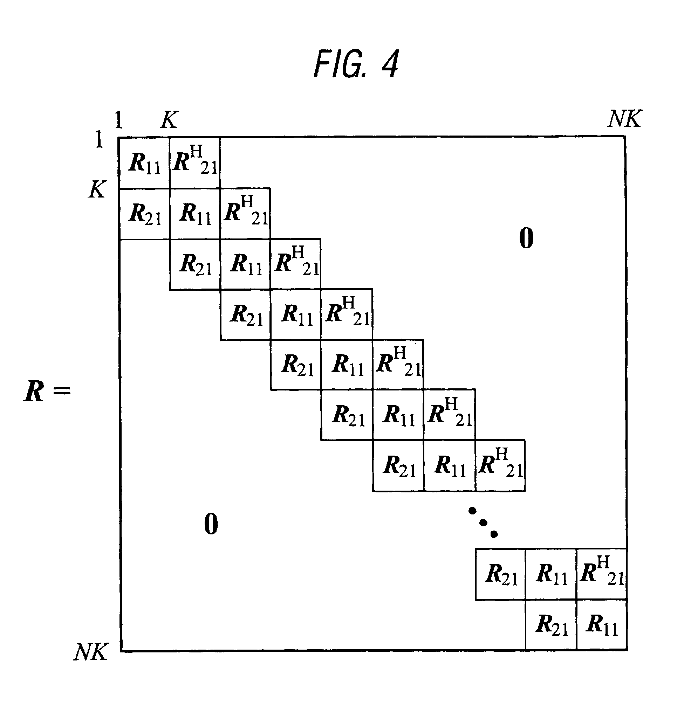

In more detail, the correlation matrix of the present invention $R=A^H A$ computed in unit 18 may be represented as shown in Figure 4, wherein sub matrices B in A result in sub matrices in R, comprising matrices $R_{1,1}$ and cross matrices $R_{2,1}$ and $R_{2,1}^H$. The effort required for the computation of R isas follows.

COMPUTATION OF $R_{1,1}$

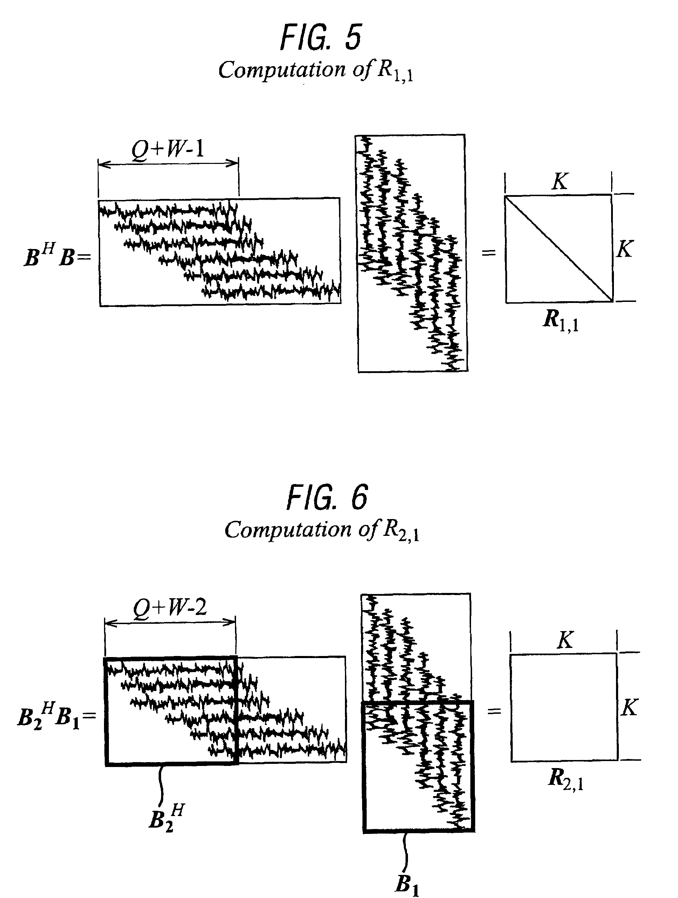

The sub-matrix $\boldsymbol{R}_{1,1} = \boldsymbol{B}^H \boldsymbol{B}$ is Hermitian (see above) . The computation of $R_{1,1}$ is shown diagrammatically in Figure 5, as multiplication of B with its transposed skew symmetric form. The resulting coefficients are as shown in the lower diagonal of the matrix, with ½ K(K+1) unique elements given by

$$\left[\boldsymbol{R}_{1,1}\right]_{p,q} = \underline{b}^{(p)H} \underline{b}^{(q)} = \sum_{l=1}^{L} \sum_{\lambda=1}^{L} h_l^{(p)} h_\lambda^{(q)*} \underbrace{\underline{c}^{(p)H}(\tau_l^{(p)}) \underline{c}^{(q)}(\tau_\lambda^{(q)})}_{\rho_\tau^{p,q} \quad \tau = \tau_l^{(p)} - \tau_\lambda^{(q)}}$$

where the computation of each inner product $\rho_\tau^{p,q}$ requires an average of ½Q multiply-and-accumulates of the form $(\pm 1 \pm j1)(\pm 1 \pm j1) + ... = (\pm 1 \pm 1) + j(\pm 1 \pm 1) + ...$ implying a total of ½Q×4 negations (NEGS) and ½Q×4 real additions (RADDS). The computation of each product-and-add $h_l^{(p)} \times h_\lambda^{(q)*} \times \rho_\tau^{p,q} + ...$ requires 16 real multiplications RMULTS and 8 real additions RADDS. It will be appreciated that NEGS, RADDS and RMULTS are software instructions each of a single machine cycle in a DSP.

The total complexity for computing $R_{1,1}$ is given by

| | Computation of $\rho$ | Other |
|---|---|---|
| NEGS | $\frac{1}{2}K(K+1) L^2 (2Q)$ | – |
| RADDS | $\frac{1}{2}K(K+1) L^2 (2Q)$ | $\frac{1}{2}K(K+1) 8L^2$ |
| RMULTS | – | $\frac{1}{2}K(K+1) 16L^2$ |

Table 1 – Operation count for computation of $R_{1,1}$.

For implementation on a typical programmable DSP where a negation, real addition and real multiplication are each single-cycle instructions, the MIPS count would be as follows:

| | Computation of $\rho$ | Other |
|---|---|---|
| NEGS | $9.1238 \times 10^3$ MIPS | – |
| RADDS | $9.1238 \times 10^3$ MIPS | $0.2852 \times 10^3$ MIPS |
| RMULTS | – | $0.5702 \times 10^3$ MIPS |

Table 2 – Programmable DSP MIPS count for a time slot of 667 µs

with K=54, Q=128.

COMPUTATION OF $R_{2,1}$

The sub-matrix $R_{2,1}$ equals the inner product of one segment, $B_1$, of B with a different segment, $B_2$, of B. Or more specifically

$$R_{2,1} = B_2^H B_1 = [B]_{1:Q+W-2,1:K}^H [B]_{Q+1:2Q+W-2,1:K}$$

as depicted in Figure 6. It will be seen the multiplication of $B_1$ with the skew symmetric transposed matrix $B_2^H$ results in a truncation of the spreading codes of both sub-matrices with a resulting square matrix $R_{2,1}$ having $K^2$ elements. Thus we are now dealing with inner products between delayed and "truncated replicas" of user spreading codes. The extent of truncation for each spreading code is a function of the its corresponding channel delays and needs to be accounted for when computing the inner products. The matrix $R_{2,1}$ is not symmetric and has $K^2$ unique elements given by

$$\left[R_{2,1}\right]_{p,q} = \breve{\underline{b}}^{(p)H} \breve{\underline{b}}^{(q)} = \sum_{l=1}^{L} \sum_{\lambda=1}^{L} h_l^{(p)} h_\lambda^{(q)*} \underbrace{\breve{\underline{c}}^{(p)H}(\tau_l^{(p)}) \breve{\underline{c}}^{(q)}(\tau_\lambda^{(q)})}_{\breve{\rho}_\tau^{p,q} \quad \tau = \tau_l^{(p)} - \tau_\lambda^{(q)}}$$

where $\breve{\underline{v}}$ represents a truncated version of $\underline{v}$. The computation of each inner product $\breve{\rho}_\tau^{p,q}$ requires an average of approximately $\frac{1}{2} \times \frac{1}{2} Q$ multiply-and-accumulates of the form $(\pm 1 \pm j1)(\pm 1 \pm j1) + \ldots = (\pm 1 \pm 1) + j(\pm 1 \pm 1) + \ldots$ implying a total of $\frac{1}{2} \times \frac{1}{2} Q \times 4$ NEGS and $\frac{1}{2} \times \frac{1}{2} Q \times 4$ RADDS. The computation of each product-and-add $h_l^{(p)} \times h_\lambda^{(q)*} \times \breve{\rho}_\tau^{p,q} + \ldots$ requires 16 RMULTS and 8 RADDS. The total complexity for computing $R_{2,1}$ is given by

| | Computation of $\rho$ | Other |
|---|---|---|
| NEGS | $K^2 L^2 (Q)$ | – |
| RADDS | $K^2 L^2 (Q)$ | $K^2 (8L^2)$ |
| RMULTS | – | $K^2 (16L^2)$ |

Table 3 – Operation count for computation of $R_{2,1}$.

For implementation on a typical programmable DSP where a negation, real addition and real multiplication are each single-cycle instructions, the MIPS count would be as follows:

| | Computation of $\rho$ | Other |
|---|---|---|
| NEGS | $8.9580 \times 10^3$ MIPS | – |
| RADDS | $8.9580 \times 10^3$ MIPS | $0.5599 \times 10^3$ MIPS |
| RMULTS | – | $1.1197 \times 10^3$ MIPS |

Table 4 – Programmable DSP MIPS count for a time slot of 667 $\mu$s

with K=54, Q=128.

Thus, the computation of the $R_{1,1}$ and $R_{2,1}$ correlation sub-matrices requires the computation of the inner-products between delayed replicas of the user's spreading codes. This is a chip-level operation and, as is evident from Tables (2) and (4), contributes significantly to the overall computational burden. Since the base-station receiver is, by definition, aware of the spreading codes used by the active mobiles in its cell, it is possible, as shown in Figure 3 to compute the inner products off-line prior to the establishment of the communication session. Since the code delays are a function of radio channels which vary significantly during the course of a communication session, it is necessary to pre-compute the inner products for all possible combinations of multipath delays.

Specifically, regarding $R_{1,1}$, the inner products $\rho_\tau^{p,q}$ p,q=1...K 1-$\lambda$=-(Q-1)...(Q-1) need to be pre-computed and stored in memory look-up table 22. For K users, there are a total of $K^2$ possible combinations of p and q. However, only ½K(K+1) of these are required since $R_{1,1}$ is symmetric. For each combination of p and q there are 2Q-1 possible relative code delays. The extreme values of the real and imaginary components of $\rho^{p,q}$ are +2Q and -2Q respectively. Then assuming $Q_{max}$=128, two 10-bit words are sufficient for storing each value of p resulting in a total memory storage requirement of ½K(K+1) x (2Q-1) x 20 bits. For K=54 and Q=128, this implies $\sim$ 1Mbytes of memory for the look-up table. This amount of memory provides a saving by a factor of about $\times 22$ in a DSP-based computation of $R_{1,1}$. Regarding $R_{2,1}$, the inner products $\tilde{\rho}_\tau^{p,q}$ p,q=1...K 1-$\lambda$=-(Q-1)...(Q-1) need to be pre-computed and stored in another region of memory look-up table 22. For K users, there are a total of $K^2$ possible combinations of p and q. For each combination of p and q there are 2Q-1 possible relative code delays (many of whom result in zero inner products due to the truncation, however this will be ignored). The extreme values of the real and imaginary components of $\tilde{\rho}_\tau^{p,q}$ are +2Q and -2Q respectively. Then assuming $Q_{max}$=128, two 10-bit words are sufficient for storing each value of p resulting in a total memory storage requirement of $K^2 \times$ (2Q-1) $\times$ 20 bits. For K=54 and Q=128, this implies $\sim$ 2Mbytes of memory. This amount of memory provides a saving by a factor of about $\times$ 12 in a DSP-based computation of $R_{2,1}$.

Note that the look-up table 22 need only contain the code cross-correlations of the mobiles that have already established dedicated communication channels on the uplink.

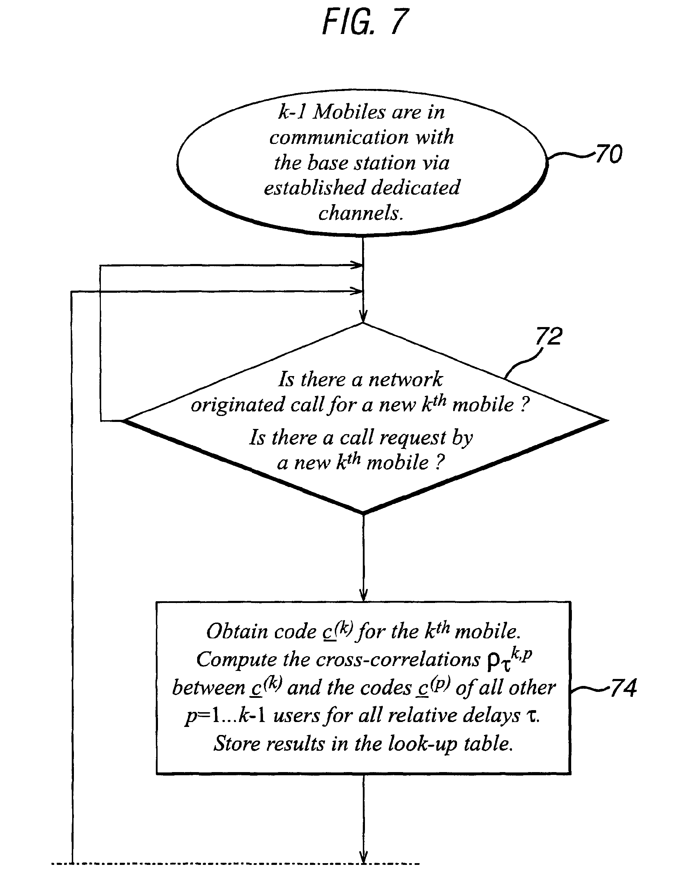

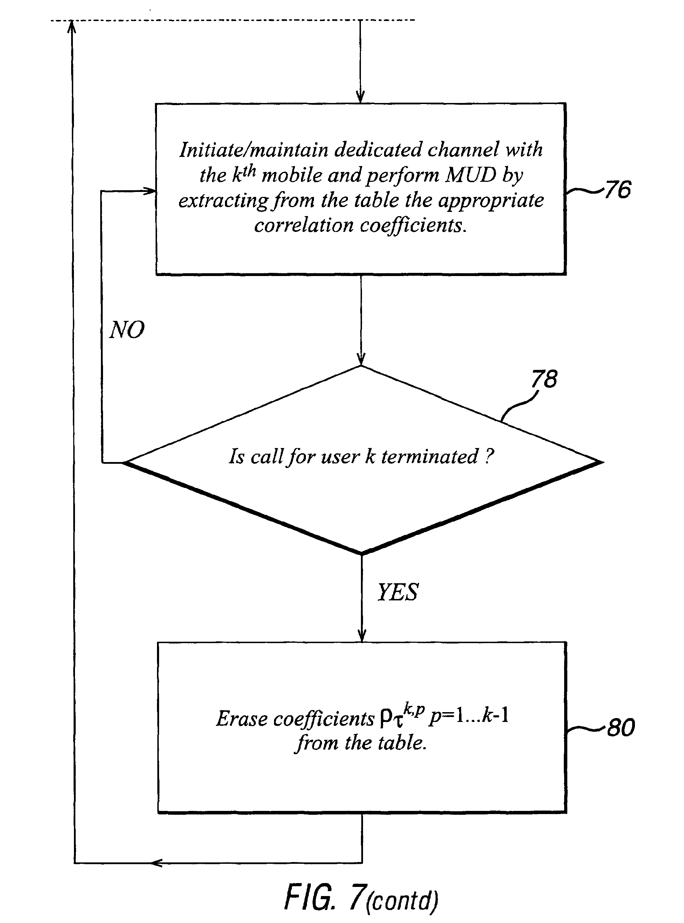

A sequence of events for the use of the embodiment of Figure 3 in computation and storage of code cross-correlations is shown in the flow chart of Figure 7, as follows.

In an initial step 70, k-1 mobiles stations (MS) have already established dedicated communication channels with a BTS (Base Transceiver Station) to provide a signal $\underline{r}$.

A repetitive check is made at 72 for a new call originating from a $k^{th}$ mobile via a random-access channel or the BTS initiating a network-originated call via a paging channel targetted at the $k^{th}$ mobile.

In either case, the mobile specifies the nature of its spreading code, $\underline{c}^{(k)}$, to the BTS during the call set-up process, as at 74. The BTS then computes the cross-correlations $\rho_\tau^{k,q}$ and $\breve{\rho}_\tau^{k,q}$ q=1...k-1 between the codes of mobile k and those of the k-1 mobiles which have already established dedicated channels with the BTS. The cross-correlations are stored in look up table 22.

In step 76, during the call, relevant values are accessed from the look up table by addressing the look up table with the delay values $\tau_1^{(k)}$ computed in unit 10, and the retrieved values from the look up table are applied to the correlation matrix unit18. Values of the channel estimate $h_1^{(k)}$ are applied from estimator unit 10, and the sub matrices $R_{1,1}$, $R_{2,1}$ of the correlation matrix are computed, as explained above. The matrix R is then applied to MUD unit 16 to perform multi-user detection of the symbols transmitted by all k mobiles.

A repetitive check is made at 78 to determine whether the call for user k is terminated. Once the call between the base and user k is determined as terminated as at 80, the cross-correlation values for user k are erased from the look-up table since they are no longer needed.

**Claims**

1. A Code Division Multiple Access (CDMA) receiver for a mobile telecommunications system, including means (10-18) for multi-user parameter estimation for a plurality of users (1...K), including means for forming a correlation matrix (R), characterised in that said means for forming a correlation matrix includes means (20) for computing prior to signal reception at least some cross- correlations (p) between user spreading codes (c), and storage means (22) for storing such cross-code correlations for use in calculation of the correlation matrix.

2. A multi-user detection Code Division Multiple Access (CDMA) receiver for a mobile telecommunications system, including means (10) for forming a channel estimate (h) for each of a plurality of users (1...K), means (12, 14) for forming a system matrix (A) wherein rows and columns represent users and spreading codes (c) as modified by channel estimates (h), means (18) for forming a correlation matrix (R), and means (14, 16) employing said correlation matrix and system matrix to recover user symbols, characterised in that said means for forming a correlation matrix includes means (20) for computing prior to signal reception at least some cross- correlations (ρ) between user spreading codes (c), and storage means (22) for storing such cross-code correlations for use in calculation of the correlation matrix.

3. A receiver according to claim 2, including rake filter means (14) for applying a version of the system matrix to incoming signals (r), and multi-user detection means (16) employing said correlation matrix to recover user symbols

4. A receiver according to any preceding claim, wherein the storage means comprises a look-up table (22), and wherein the cross-correlation computing means is arranged to compute all possible cross correlations for storage in the look up table.

5. A receiver according to claim 2, wherein the storage means comprises a look-up table (22), and wherein the cross-correlation computing means is arranged to compute all possible cross correlations for storage in the look up table, and wherein the look up table is addressed by said channel estimate means so as to provide cross correlations for estimated channel delays (τ) to said means for forming a correlation matrix.

6. A receiver according to claim 2 or 5, wherein said means for forming a correlation matrix is arranged to receive channel estimate coefficients (h) from said means for forming a channel estimate, and is arranged for multiplying these coefficients by the cross-code correlations.

7. A receiver according to any preceding claim, wherein the means for forming a correlation matrix is effective to divide the system matrix into submatrices (B), one for each user symbol of a message of N symbols, and wherein each submatrix is multiplied by a version of an adjacent sub matrix to provide a further sub matrix comprising diagonal sections $R_{1,1}$ and cross sections , $R_{2,1}$, $R_{2,1}^H$.

8. A receiver according to claim 2, wherein the means for forming a correlation matrix is effective to divide the system matrix into submatrices (B), one for each user symbol of a message of N symbols, and wherein each submatrix is multiplied by a version of an adjacent sub matrix to provide a further sub matrix comprising diagonal sections $R_{11}$ and cross sections , $R_{21}$, $R_{21}^H$, and wherein the storage means is arranged to provide cross correlation coef-

ficients $\rho_\tau^{k,q}$, q=1...k-1, of a diagonal section $R_{11}$ for channel delay values $\tau$ as follows:

$$\sum_{l=1}^{L} \sum_{\lambda=1}^{L} h_l^{(p)} h_\lambda^{(q)*} \underbrace{\underline{c}^{(p)H}(\tau_l^{(p)})\underline{c}^{(q)}(\tau_\lambda^{(q)})}_{\rho_\tau^{p,q} \quad \tau = \tau_l^{(p)} - \tau_\lambda^{(q)}}.$$

where h represents channel estimates

9.  A receiver according to claim 2 or 8, wherein the means for forming a correlation matrix is effective to divide the system matrix into submatrices (B), one for each user symbol of a message of N symbols, and wherein each submatrix is multiplied by a version of an adjacent sub matrix to provide a further sub matrix comprising diagonal sections $R_{11}$ and cross sections , $R_{21}$, $R_{21}{}^H$, and wherein the storage means is arranged to provide truncated cross correlation coefficients $\breve{\rho}_\tau^{k,q}$ q=1...k-1, of a cross section $R_{2,1}$ for channel delay values T as follows

$$\sum_{l=1}^{L} \sum_{\lambda=1}^{L} h_l^{(p)} h_\lambda^{(q)*} \underbrace{\underline{\breve{c}}^{(p)H}(\tau_l^{(p)})\underline{\breve{c}}^{(q)}(\tau_\lambda^{(q)})}_{\breve{\rho}_\tau^{p,q} \quad \tau = \tau_l^{(p)} - \tau_\lambda^{(q)}}.$$

where h represents channel estimates

10. A receiver according to claim 2, wherein the receiver is a joint detection receiver

11. A receiver according to claim 2, wherein the receiver includes a subtractive interference cancellation detector.

12. In a multi-user detection Code Division Multiple Access (CDMA) mobile telecommunications system, a method of receiving individual user signals, comprising: forming a multi-user parameter estimation for a plurality of users (1... K), including forming a correlation matrix (R) and employing correlation matrix to recover user symbols, characterised in that the method comprises detecting a new call, recovering the spreading code( $\underline{c}^{(k)}$)for the respective mobile station (k) at the base transceiver station (BTS) during the call set-up process;

    computing during the call set-up process cross-correlations ($\rho_\tau^{k,q}$, $\breve{\rho}_\tau^{k,q}$) between the codes of mobile station k and those of the k-1 mobile stations which have already established calls with the BTS; and
    employing the cross-correlations during the call for reception of the symbols transmitted by all k mobile stations.

13. A method according to claim 12, wherein the new call originates from a $k^{th}$ mobile station via a random-access channel <u>or</u> the BTS initiates a network-originated call via a paging channel targetted at the $k^{th}$ mobile station.

14. A method according to claim 12 or 13, including detecting termination of the call, and once the call is terminated, erasing the relevant cross correlation values from the storage means.

15. A method according to claim 12, 13 or 14, wherein all possible cross correlations are stored in a look up table (22), and the look up table is addressed by estimated channel delays ($\tau$), so as to provide cross code correlations for forming a correlation matrix.

16. A method according to claim 15, wherein the correlation matrix is formed from channel estimate coefficients (h), and multiplying these coefficients by the cross-code correlations.

17. A method according to any of claims 12 to 16, wherein the correlation matrix is formed by dividing the system matrix into submatrices (B), one for each user symbol of a message of N symbols, and wherein each submatrix is multiplied by a version of an adjacent sub matrix to provide a further sub matrix comprising diagonal sections $R_{1,1}$ and cross sections , $R_{2,1}$, $R_{2,1}{}^H$.

**18.** A method according to claim 17, wherein the cross correlation coefficients $\rho_\tau^{k,q}$, q=1...k-1 , of a diagonal section $R_{1,1}$ for channel delay values $\tau$ are as follows:

$$\sum_{l=1}^{L} \sum_{\lambda=1}^{L} h_l^{(p)} h_\lambda^{(q)*} \underbrace{\underline{c}^{(p)H}(\tau_l^{(p)}) \underline{c}^{(q)}(\tau_\lambda^{(q)})}_{\rho_\tau^{p,q} \quad \tau = \tau_l^{(p)} - \tau_\lambda^{(q)}},$$

where h represents channel estimates.

**19.** A method according to claim 17 or 18, wherein truncated cross correlation coefficients $\breve{\rho}_\tau^{k,q}$, q=1...k-1 , of a cross section $R_{2,1}$ for channel delay values $\tau$ are as follows

$$\sum_{l=1}^{L} \sum_{\lambda=1}^{L} h_l^{(p)} h_\lambda^{(q)*} \underbrace{\underline{\breve{c}}^{(p)H}(\tau_l^{(p)}) \underline{\breve{c}}^{(q)}(\tau_\lambda^{(q)})}_{\breve{\rho}_\tau^{p,q} \quad \tau = \tau_l^{(p)} - \tau_\lambda^{(q)}}.$$

where h represents channel estimates.

FIG. 1

EP 1 128 564 A1

*FIG. 2*

received signal

$\underline{r}$

Channel Estimation — 10

$h_l^{(k)}$, $\tau_1^{(k)}$
$l=1...L$
$k=1...K$

Compute A — 12

$\underline{c}^{(k)}$
$k=1...K$
User spreading codes

RAKE
$A^H$ — 14

MUD — 16

$\underline{\hat{x}}$ User symbol estimates

Compute AHA — 18

## FIG. 3

Spreading codes
of users active
in the cell

$\underline{c}^{(k)}$
$k=1...K$

received signal

$\underline{r}$

*RAKE*

$A^H$ — 14

*MUD* — 16

$\hat{\underline{x}}$

*Channel Estimation* — 10

$h_l^{(k)}, \tau_1^{(k)}$
$l=1...L$
$k=1...K$

*Compute A* — 12

$\tau_1^{(k)}$
$l=1...L$
$k=1...K$

*Computer code cross-correlations (off-line)* — 20

*Look-up Table* — 22

$\rho_\tau^{p,q}$
$\check{\rho}_\tau^{p,q}$

*Compute $A^H A$* — 18

EP 1 128 564 A1

## FIG. 4

## FIG. 5
### Computation of $R_{1,1}$

$$B^H B =$$

$Q+W\text{-}1$

$K$

$K$

$$= \quad R_{1,1}$$

## FIG. 6
### Computation of $R_{2,1}$

$$B_2{}^H B_1 =$$

$Q+W\text{-}2$

$B_2{}^H$

$B_1$

$K$

$K$

$$= \quad R_{2,1}$$

## FIG. 7

**k-1 Mobiles are in communication with the base station via established dedicated channels.** —70

**Is there a network originated call for a new $k^{th}$ mobile ?**

**Is there a call request by a new $k^{th}$ mobile ?** —72

**Obtain code $\underline{c}^{(k)}$ for the $k^{th}$ mobile. Compute the cross-correlations $\rho_\tau^{k,p}$ between $\underline{c}^{(k)}$ and the codes $\underline{c}^{(p)}$ of all other $p=1...k-1$ users for all relative delays $\tau$. Store results in the look-up table.** —74

Initiate/maintain dedicated channel with the $k^{th}$ mobile and perform MUD by extracting from the table the appropriate correlation coefficients. ~76

NO

Is call for user k terminated ? ~78

YES

Erase coefficients $\rho_\tau^{k,p}$ $p=1...k-1$ from the table. ~80

FIG. 7(contd)

**European Patent Office**

## EUROPEAN SEARCH REPORT

Application Number

EP 00 30 1544

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 01946 A (NOKIA TELECOMMUNICATIONS OY ;HOLMA HARRI (FI); TOSKALA ANTTI (FI);) 14 January 1999 (1999-01-14) * abstract; figure 2 * * page 5, line 4 - page 7, line 6 * * page 9, line 5 - line 25 * | 1-6, 10-16 | H04B1/707 |
| X | WO 98 38805 A (NOKIA MOBILE PHONES LTD ;WICHMAN RISTO (FI); HOTTINEN ARI (FI)) 3 September 1998 (1998-09-03) * abstract; figure 3 * * page 5, line 21 - line 35 * * page 7, line 20 - line 21 * | 1-6, 10-16 | |
| X | US 6 011 812 A (LAAKSO TIMO ET AL) 4 January 2000 (2000-01-04) * abstract; figure 4 * * column 5, line 66 - column 6, line 17 * | 1-6, 10-16 | |
| X | WO 98 43362 A (YELLIN DANIEL ;DSPC ISRAEL LTD (IL)) 1 October 1998 (1998-10-01) * page 7, line 1 - page 9, line 6 * * page 16, line 20 - line 23; figures 1,2 * | 1-6, 10-16 | TECHNICAL FIELDS SEARCHED (Int.Cl.7) H04B |
| A | KARIMI H R ET AL: "A novel and efficient solution to block-based joint-detection using approximate Cholesky factorization" IEEE INTERNATIONAL SYMPOSIUM ON PERSONAL, INDOOR AND MOBILE RADIO COMMUNICATIONS,XX,XX, vol. 3, 1998, pages 1340-1345-1345vol3, XP002112134 | 1-18 | |

The present search report has been drawn up for all claims

| Place of search | Date of completion of the search | Examiner |
|---|---|---|
| MUNICH | 14 June 2000 | Staeger, R |

17

## ANNEX TO THE EUROPEAN SEARCH REPORT
## ON EUROPEAN PATENT APPLICATION NO.

EP 00 30 1544

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2000

| Patent document cited in search report | | Publication date | Patent family member(s) | | Publication date |
|---|---|---|---|---|---|
| WO 9901946 | A | 14-01-1999 | FI | 972704 A | 24-12-1998 |
| | | | AU | 7920698 A | 25-01-1999 |
| | | | EP | 0988706 A | 29-03-2000 |
| | | | NO | 996400 A | 22-12-1999 |
| WO 9838805 | A | 03-09-1998 | FI | 970887 A | 29-08-1998 |
| | | | AU | 6102598 A | 18-09-1998 |
| | | | EP | 0966795 A | 29-12-1999 |
| US 6011812 | A | 04-01-2000 | FI | 943906 A | 26-02-1996 |
| | | | AU | 686866 B | 12-02-1998 |
| | | | AU | 3259295 A | 14-03-1996 |
| | | | CN | 1135814 A | 13-11-1996 |
| | | | EP | 0740864 A | 06-11-1996 |
| | | | WO | 9606487 A | 29-02-1996 |
| | | | JP | 9504674 T | 06-05-1997 |
| | | | NO | 961641 A | 24-06-1996 |
| WO 9843362 | A | 01-10-1998 | AU | 6417498 A | 20-10-1998 |
| | | | EP | 0970573 A | 12-01-2000 |
| | | | US | 6034986 A | 07-03-2000 |

EPO FORM P0459

For more details about this annex : see Official Journal of the European Patent Office, No. 12/82